# EUROPEAN PATENT APPLICATION

(11) **EP 1 834 697 A2**
(43) Date of publication of application: **19.09.2007**
(21) Application number: 06291180.5
(22) Date of filing: 20.07.2006
(51) Int. Cl.: B04C 5/185, B04C 5/26, B04C 5/28, A47L 9/16

(54) **Multi-cyclone contaminants collector for vacuum cleaner**

(30) Priority: 15.03.2006 KR 20060023914
(71) Applicant: Samsung Gwangju Electronics Co., Ltd., Gwangju-city (KR)
(72) Inventor: Kim, Tak-soo, 102-1104, Seonghwa Fine Ville, Gwangju-city (KR)
(74) Representative: Blot, Philippe Robert Emile

(57) **Abstract**

The present invention relates to a multi-cyclone contaminants collector having a plurality of contaminants chambers corresponding to a plurality of cyclones. The multi-cyclone contaminants collector includes at least one first cyclone drawing outside air so as to separate contaminants; at least one second cyclone separating fine contaminants from air discharged from the at least one first cyclone, the at least one second cyclone having a contaminants discharging opening for discharging the separated fine contaminants; and a dust cap disposed at the contaminants discharging opening, the dust cap preventing discharged fine contaminants from entering the second cyclone.

## Description

### CROSS-REFERENCE TO RELATED APPLICATIONS

This application claims the benefit under 35 U.S.C. § 119(a) from Korean Patent Application No. 2006-23914 filed on March 15, 2006 in the Korean Intellectual Property Office, the disclosure of which is incorporated herein by reference in its entirety.

### BACKGROUND OF THE INVENTION

### 1. Field of the Invention

The present invention relates to a vacuum cleaner. More particularly, the present invention relates to a multi-cyclone contaminants collector for a vacuum cleaner.

### 2. Description of the Related Art

Generally, a cyclone contaminants collector for a vacuum cleaner draws-in outside-air, forces the drawn-in outside-air to whirl, and separates and collects contaminants from the whirled outside-air by centrifugal force.

Therefore, the conventional cyclone contaminants collector includes a cyclone for whirling outside-air to centrifugally separate contaminants, and a contaminants chamber for collecting contaminants separated in the cyclone.

Furthermore, a vacuum cleaner has currently been employed a multi-cyclone contaminants collector for increasing contaminant collecting efficiency. The multi-cyclone contaminants collector has a plurality of cyclones connected in series so as to remove contaminants from drawn-in outside-air in more than two steps. A conventional multi-cyclone contaminants collector for a vacuum cleaner includes a first cyclone for separating relatively large contaminants, and a second cyclone for separating fine contaminants. At this time, the second cyclone includes a plurality of cyclones. The conventional multi-cyclone contaminants collector furthermore includes a first contaminants chamber for collecting contaminants discharged from the first cyclone, and a second contaminants chamber for collecting fine contaminants discharged from the second cyclone. Therefore, the conventional multi-cyclone contaminants collector can effetely remove fine contaminants.

However, because the conventional multi-cyclone contaminants collector has only one second contaminants chamber to collect contaminants discharged from all the plurality of second cyclones, a whirling air current in any one of the plurality of second cyclones scatters contaminants collected in the second contaminants chamber thereby affecting whirling air currents in the other second cyclones.

Also, when the conventional multi-cyclone contaminants collector is inclined or when contaminants collected in the second contaminants chamber are re-scatter, there is a drawback that contaminants flow back into the second cyclones.

### SUMMARY OF THE INVENTION

The present invention has been developed in order to overcome the above drawbacks and other problems associated with the conventional arrangement. An aspect of the present invention is to provide a multi-cyclone contaminants collector for a vacuum cleaner preventing contaminants collected in a second contaminants chamber from flowing back into a second cyclone.

The other aspect of the present invention is to provide a multi-cyclone contaminants collector for a vacuum cleaner preventing a whirling air current in any one of a plurality of second cyclones from scattering contaminants separated and collected by the other second cyclones.

The above aspect and/or other feature of the present invention can substantially be achieved by providing a multi-cyclone contaminants collector for a vacuum cleaner, which includes at least one first cyclone drawing outside air so as to separate contaminants; at least one second cyclone separating fine contaminants from air discharged from the at least one first cyclone, the at least one second cyclone having a contaminants discharging opening for discharging the separated fine contaminants; and a dust cap disposed at the contaminants discharging opening, the dust cap preventing discharged fine contaminants from entering the second cyclone.

Here, the second cyclone has a diameter smaller than the first cyclone. The contaminants discharging opening is disposed at a top end of the second cyclone.

Also, the dust cap is disposed on a level with the contaminants discharging opening or to be projected from the contaminants discharging opening. The dust cap further comprises a dust guiding part.

According to another aspect of the present invention, a multi-cyclone contaminants collector for a vacuum cleaner includes at least one first cyclone drawing outside air so as to separate contaminants; a plurality of second cyclones separating fine contaminants from air discharged from the at least one first cyclone, each of the plurality of second cyclones having a contaminants discharging opening for discharging the separated fine contaminants; a plurality of second contaminants chambers respectively wrapping around at least 2 second cyclones among the plurality of second cyclones, each of the plurality of second contaminants chambers collecting fine contaminants discharged from the wrapped second cyclones; and a partition wall partitioning each of the plurality of second contaminants chambers into spaces corresponding the at least 2 second cyclones to collect fine contaminants discharged from each of the at least 2 second cyclones.

Here, the plurality of second contaminants chambers is in contact with an outer circumferential surface of the first cyclone.

Also, each of the plurality of second contaminants chambers is spaced apart from next second contaminants chamber so that contaminants separated in the first cyclone are discharged through spaces between the plurality of second contaminants chambers.

Each of the plurality of second cyclones further includes a dust cap disposed at the contaminants discharging opening to prevent fine contaminants collected in the second contaminants chamber from flowing back into the second cyclone.

A lower portion of the at least 2 second cyclones wrapped around by the second contaminants chamber is projected out the second contaminants chamber.

The multi-cyclone contaminants collector further includes a first contaminants chamber collecting contaminants discharged from the first cyclone, the first contaminants chamber wrapping around the first cyclone and the plurality of second contaminants chambers.

According to still another aspect of the present invention, a multi-cyclone contaminants collector for a vacuum cleaner includes: a first cyclone separating contaminants from outside air and discharging separated contaminants in a direction opposite to the gravity direction; a plurality of second cyclone separating fine contaminants from air discharged from the first cyclone, each of the second cyclones having a contaminants discharging opening for discharging separated fine contaminants in a direction opposite to the gravity direction; a plurality of second contaminants chambers respectively wrapping around at least 2 second cyclones among the plurality of second cyclones, each of the second contaminants chambers collecting fine contaminants discharged from the wrapped second cyclones; and a partition wall partitioning each of the plurality of second contaminants chambers into spaces corresponding to the at least 2 second cyclones to collect fine contaminants discharged from each of the at least 2 second cyclones. Each of the plurality of second contaminants chambers is spaced apart from next second contaminants chamber so that contaminants separated in the first cyclone are discharged through spaces between the plurality of second contaminants chambers.

Here, the plurality of second contaminants chambers is in contact with an outer circumferential surface of the first cyclone.

Each of the plurality of second cyclones further includes a dust cap disposed at the contaminants discharging opening to prevent fine contaminants collected in the second contaminants chamber from flowing back into the second cyclone. Also, the dust cap further includes a dust guiding part.

Other objects, advantages and salient features of the invention will become apparent from the following detailed description, which, taken in conjunction with the annexed drawings, discloses preferred embodiments of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:

Fig. 1 is an exploded perspective view illustrating a multi-cyclone contaminants collector for a vacuum cleaner according to an embodiment of the present invention;

Fig. 2 is a perspective view illustrating the multi-cyclone contaminants collector of Fig. 1 without an upper cover;

Fig. 3 is a sectional view illustrating the multi-cyclone contaminants collector of Fig. 1;

Fig. 4A is a top view illustrating another example of a dust cap of the multi-cyclone contaminants collector of Fig. 1;

Fig. 4B is a sectional view of the dust cap of Fig. 4A;

Fig. 5 is a plain view illustrating the multi-cyclone contaminants collector of Fig. 1 having another example of second contaminants chambers;

Fig. 6 is a perspective view illustrating the multi-cyclone contaminants collector of Fig. 1 having another example of an outside receptacle; and

Fig. 7 is a sectional view illustrating a vacuum cleaner having a multi-cyclone contaminants collector according to an embodiment of the present invention.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the present invention will be described in detail with reference to the accompanying drawings.

The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of exemplary embodiments of the present invention.

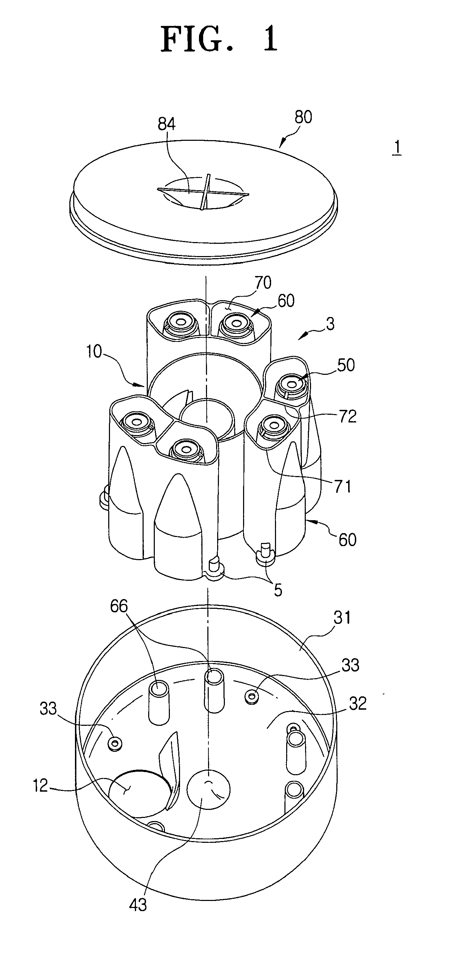

Referring to Figs. 1 to 3, a multi-cyclone contaminants collector 1 for a vacuum cleaner according to an embodiment of the present invention includes a first cyclone 10, a first contaminants chamber 30, a plurality of second cyclones 60, and a plurality of second contaminants chambers 70.

The first cyclone 10 draws in outside-air containing contaminants such as dust, dirt and so on (hereinafter, referred to as contaminants-laden air), and then, forces contaminants-laden air to whirl so that contaminants are separated from the contaminants-laden air by centrifugal force operating upon the whirling contaminants-laden air.

The first cyclone 10 includes a first cyclone body 20, an air-communicating member 40, and an air suction pipe 11.

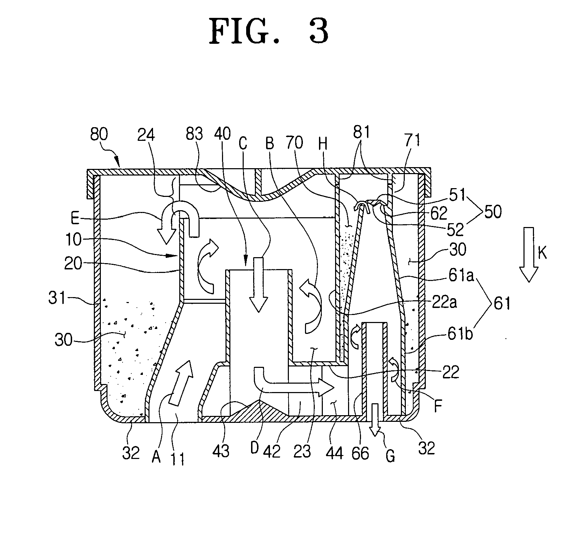

The first cyclone body 20 is formed in a substantially hollow cylindrical shape with an opened top end and a closed bottom end. Contaminants-laden air is entered a lower portion of the first cyclone body 20 through the air suction pipe 11, and is whirled inside the first cyclone body 20 so as to form an upwardly whirling air current. As a result, contaminants are separated from the contaminants-laden air by centrifugal force operating upon the upwardly whirling air current, and discharged in a direction opposite to the gravity direction (an opposite direction of arrow K of Fig. 3). In other words, separated contaminants are discharged into the first contaminants chamber 30 over the top end of the first cyclone body 20 in the direction of arrow E of Fig. 3.

The air-communicating member 40 discharges air (hereinafter, referred to as semi-clean air), which has contaminants removed from the contaminants-laden air in the first cyclone body 20 by centrifugal force, to each of the plurality of second cyclones 60. At this time, the semi-clean air contains fine contaminants having not been removed in the first cyclone 10.

The air-communicating member 40 includes an air-communicating pipe 41 and a plurality of air guiding parts 42. The air-communicating pipe 41 is formed in a substantially hollow cylindrical shape, and projects from the center of a bottom surface 22 of the first cyclone body 20 into an inner space 23 of the first cyclone body 20. The air-communicating pipe 41 has opposite opened ends, and a top end of the air-communicating pipe 41 is spaced apart from an upper cover 80. The plurality of air guiding parts 42 is radially disposed based on the air-communicating pipe 41 under the bottom surface 22 of the first cyclone body 20. Therefore, the bottom surface 22 of the first cyclone body 20, the plurality of air guiding parts 42, and a bottom surface 32 of an outside receptacle 31 form a plurality of air pathways 44. A bottom end of the air-communicating pipe 41 is in fluid communication with the plurality of air pathways 44. Also, an air dispersing part 43 that disperses semi-clean air discharged from the air-communicating pipe 41 into each of the plurality of air pathways 44 is disposed in the center of the plurality of air guiding parts 42. Therefore, semi-clean air discharged through the air-communicating pipe 41 in the gravity direction (a direction of arrow K of Fig. 3) crashes against the air dispersing part 43, is scattered by the air dispersing part 43, and then, enters each of the plurality of second cyclones 60 through the plurality of air pathways 44.

In this embodiment, the plurality of air guiding parts 42 is integrally formed with the bottom surface 22 of the first cyclone body 20 as shown in Fig. 3. Alternatively, the plurality of air guiding parts 42, although not shown, may be integrally formed with the bottom surface 32 of the outside receptacle 31. Preferably, the plurality of air guiding parts 42 is formed to be separated from the bottom surface 32 of the outside receptacle 31 so that it is easy to clean the plurality of air pathways 44 when the plurality of air pathways 44 get clogged.

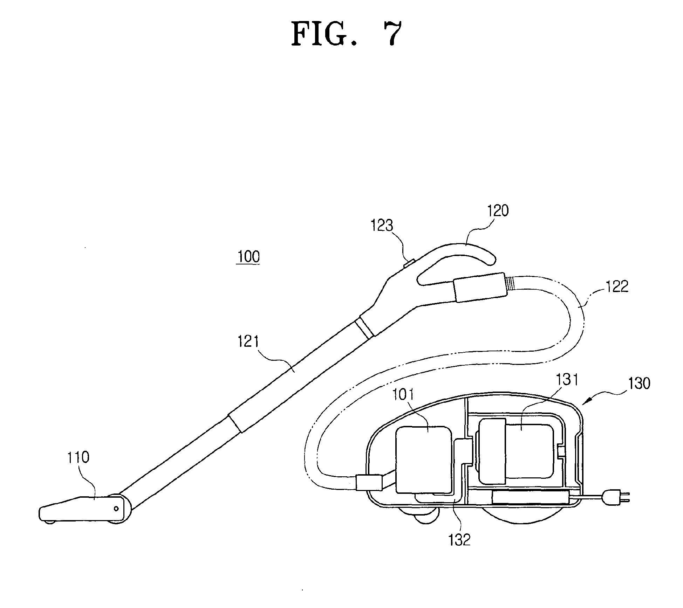

The air suction pipe 11 is in fluid communication with a suction brush 110 (see Fig. 7), and is formed at the lower portion of the first cyclone body 20 to force the contaminants-laden air drawn in the first cyclone body 20 to form an upwardly whirling air current. In this embodiment, the air suction pipe 11 is inclined upwardly through the bottom surface 22 of the first cyclone body 20. As a result, contaminants-laden air entering from the suction brush 110 forms an upwardly whirling air current inside the first cyclone body 20.

The second cyclone 60 takes the semi-clean air discharged from the first cyclone 10 and causes the semi-clean air to form another upwardly whirling air current so that fine contaminants are separated from the semi-clean air by centrifugal force operating upon the whirling semi-clean air. The second cyclone 60 includes at least one cyclone, and has a smaller diameter than the first cyclone 10 for separating fine contaminants from semi-clean air. The multi-cyclone contaminants collector 1 according to this embodiment includes a plurality of second cyclones 60.

The plurality of second cyclones 60 is arranged to wrap around the first cyclone 10. Each of the plurality of second cyclones 60 draws the semi-clean air discharged from the first cyclone 10 in the gravity direction through a lower portion of the second cyclone 60, and then, causes the drawn-in semi-clean air to form an upwardly whirling air current. Fine contaminants remaining in the semi-clean air are centrifugally separated by centrifugal force operating upon the upwardly whirling air current, and are discharged in a direction opposite to the gravity direction (an opposite direction of arrow K of Fig. 3). Clean air is discharged from the second cyclone 60 in the gravity direction (a direction of arrow K of Fig. 3). In this embodiment, six (6) second cyclones 60 are arranged along an outer circumferential surface of the first cyclone body 20.

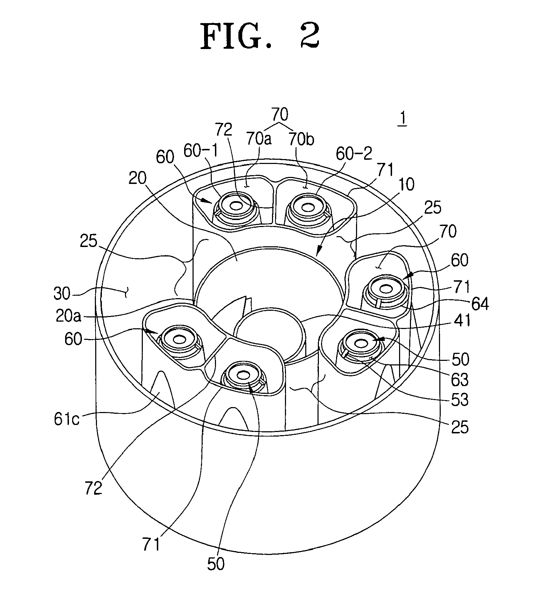

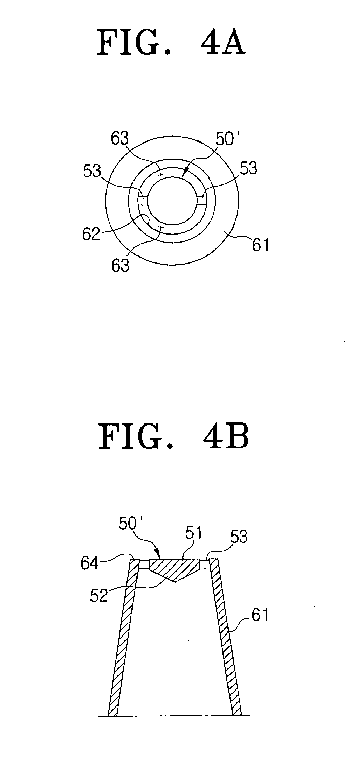

Each of the plurality of second cyclones 60 includes a second cyclone body 61 and an air-discharging pipe 66. The second cyclone body 61 has a bottom part 61b formed in a substantially hollow cylindrical shape and an upper part 61a formed in a substantially hollow conical shape. The second cyclone body 61 has opened opposite ends. A diameter of the conical upper part 61a of the second cyclone body 61 decreases from a bottom end to a top end. Also, the top end of the second cyclone body 61 forms a dust-discharging opening 62 to discharge the separated fine contaminants. A dust cap 50 is disposed at the dust-discharging opening 62. There is a gap 63 between the dust cap 50 and the dust-discharging opening 62 as shown in Fig. 2. Therefore, fine contaminants separated in the second cyclone body 61 are discharged to the second contaminants chamber 70 through the gap 63 between the dust cap 50 and the dust-discharging opening 62. The dust cap 50 is fixed at the top end 64 of the second cyclone body 61 by a pair of connecting parts 53. The dust cap 50 projects from the top end 64 of the second cyclone body 61. In other words, the dust cap 50 has a top surface 51 that is at a higher level than the contaminants discharging opening 62, that is, the top end 64 of the second cyclone body 61. Alternatively, the dust cap 50' may be disposed so that the top surface 51 is level with the contaminants discharging opening 62, that is, the top end 64 of the second cyclone body 61 as shown in Figs. 4A and 4B. Preferably, the dust cap 50 further includes a dust guiding part 52 formed on a bottom surface of the dust cap 50 with a substantially conical shape. The dust guiding part 52 guides the fine contaminants separated in the second cyclone body 61 to be discharged through the gap 63 between the dust cap 50 and the dust-discharging opening 62. When the dust cap 50 is disposed at the dust-discharging opening 62, the dust cap 50 prevents fine contaminants collected in the second contaminants chamber 70 from flowing back into the second cyclone body 61. Therefore, when the multi-cyclone contaminants collector 1 is inclined or overturned, fine contaminants collected in the second contaminants chamber 70 can not flow back into the second cyclone body 61. Also, the dust cap 50 prevents fine contaminants clinging to an inner surface of an inner wall 71 forming the second contaminants chamber 70 from entering the second cyclone body 61.

The bottom part 61b of each of the plurality of second cyclone bodies 61 is in fluid communication with the first cyclone 10 via the plurality of air pathways 44. Therefore, the semi-clean air discharged from the air-communicating pipe 41 enters inside the second cyclone body 61 through the air pathways 44, and then, forms the upwardly whirling air current. Fine contaminants are separated from the semi-clean air, and then, moved in a direction opposite to the gravity direction by centrifugal force so as to be discharged through the dust-discharging opening 62 of the second cyclone body 61.

The air-discharging pipe 66 has a substantially hollow cylindrical shape, and projects from the center of a bottom surface of the second cyclone body 61 to the inside of the second cyclone body 61. The air-discharging pipe 66 is in fluid communication with a vacuum generator 131 via a connecting member 132 (see Fig. 7). The air-discharging pipe 66 is formed to have the substantially same height as the bottom part 61 b of the second cyclone body 61 with opened opposite ends. Therefore, clean air, which has fine contaminants removed by centrifugal force inside the second cyclone body 61, is discharged through the air-discharging pipe 66 in the gravity direction (the direction of arrow K of Fig. 3).

The second contaminants chamber 70 comprises of a plurality of contaminants chambers corresponding to the plurality of second cyclones 60 to collect fine contaminants discharged from each of the plurality of second cyclones 60. In the multi-cyclone contaminants collector 1 according to this embodiment, one second contaminants chamber 70 wraps around two (2) second cyclones 60 so that the multi-cyclone contaminants collector 1 has three (3) second contaminants chambers 70. Each of the second contaminants chambers 70 is formed as a space between the inner wall 71 wrapping around the two (2) second cyclones 60-1 and 60-2 and an outer circumferential surface of each of the two (2) second cyclones 60-1 and 60-2. Also, the second contaminants chamber 70 is partitioned by a partition wall 72 into two (2) dust chambers 70a and 70b collecting fine contaminants discharged from each of the two (2) second cyclones 60-1 and 60-2. For an example, the second contaminants chamber 70 in an upper side with respect to the first cyclone body 20 in Fig. 2 is partitioned by the partition wall 72 into a first dust chamber 70a collecting fine contaminants discharged from a left second cyclone 60-1 and a second dust chamber 70b collecting fine contaminants discharged from a right second cyclone 60-2. Therefore, fines contaminants discharged from each of the left and right second cyclones 60-1 and 60-2 are collected in each of the first and second dust chambers 70a and 70b. As a result, fine contaminants collected in the first dust chamber 70a are not scattered by a whirling air current of the right second cyclone 60-2 disposed in the second dust chamber 70b next to the first dust chamber 70a. Fine contaminants collected in the second dust chamber 70b are not scattered by a whirling air current of the left second cyclone 60-1 disposed in the first dust chamber 70a next to the second dust chamber 70b.

The inner wall 71 of the second contaminants chamber 70 is higher than the second cyclone body 61 so as to collect fine contaminants discharged from the second cyclone body 61. Also, some part of the inner wall 71 is preferably shared with the first cyclone body 20. In other words, as shown in Fig. 3, some part 20a of the first cyclone body 20 forms some part of the inner wall 71 so that the volume of the multi-cyclone contaminants collector 1 is minimized. Also, the inner wall 71 is formed to be in contact with one side of the top end 64 of the second cyclone body 61. As a result, a side portion 61c of the second cyclone body 61 is projected into the first contaminants chamber 30. In other words, the side portion 61c of the second cyclone body 61 is projected out the second contaminants chamber 70. By the above-described structure, the volume of the first contaminants chamber 30 is increased while the volume of the second contaminants chamber 70 is decreased. However, the above-described inner wall 71 is only one example, it goes without saying that the inner wall 71 can be formed in other suitable shapes.

Furthermore, each of the plurality of second contaminants chambers 70 is spaced apart from each other. Therefore, contaminants discharged from the top end of the first cyclone 10 are collected in the first contaminants chamber 30 through spaces 25 between the plurality of second contaminants chambers 70.

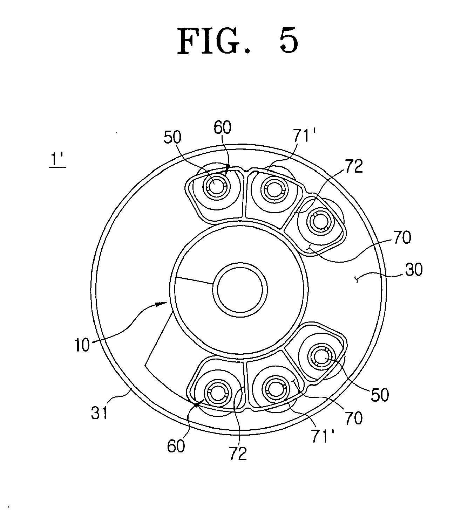

In the above description, one second contaminants chamber 70 is formed to wrap around two (2) second cyclones 60. However, this is only one example so that one second contaminants chamber 70 may be formed to wrap around three (3) second cyclones 60 or more. Fig. 5 shows a multi-cyclone contaminants collector 1' that one second contaminants chamber 70' wraps around three (3) second cyclones 60.

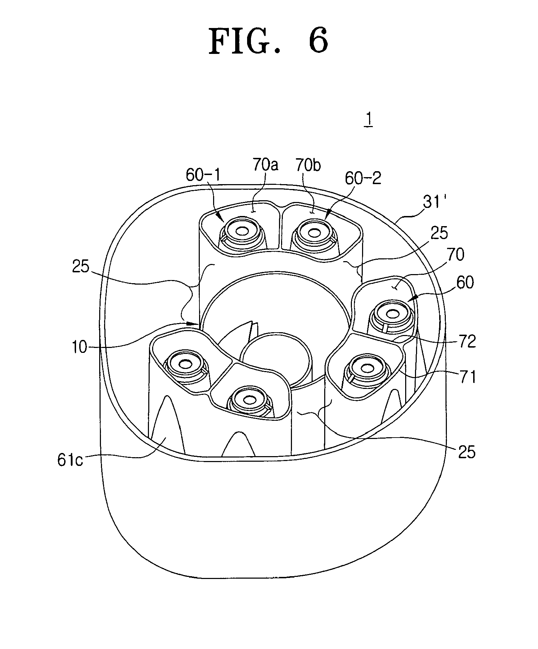

The first contaminants chamber 30 is formed to collect contaminants discharged from the first cyclone 10. Referring to Figs. 2 and 3, the first contaminants chamber 30 is formed to wrap around outer circumferential surfaces of the plurality of second contaminants chambers 70 and some outer circumferential surface of the first cyclone 10. In other words, the first contaminants chamber 30 is formed as a space between parts of the first cyclone body 20 not wrapped around by the plurality of second contaminants chambers 70, outer circumferential surfaces of the plurality of second contaminants chambers 70, and an inner surface of the outside receptacle 31. Here, the first contaminants chamber 70 is in fluid communication with the first cyclone body 20 through the plurality of spaces 25 between the plurality of second contaminants chambers 70 thereby collecting contaminants discharged from the top end of the first cyclone body 20. The outside receptacle 31 is formed in a substantially cylindrical shape to wrap around the first cyclone 10 and the plurality of second contaminants chambers 70 with an opened top end and a bottom end closed by the bottom surface 32 thereof. Here, the outside receptacle 31 is not limited as a substantially cylindrical shape, and the outside receptacle 31 can be formed in other suitable shapes as desired. Fig. 6 shows an example of the outside receptacle 31' formed in another shape. The bottom surface 32 of the outside receptacle 31 forms a bottom surface of the first contaminants chamber 30. The bottom surface 32 of the outside receptacle 31 covers the bottom end of the air-communicating member 40 so that it forms the plurality of air pathways 44 with the plurality of air guiding parts 42. Furthermore, the bottom surface 32 of the outside receptacle 31 forms a bottom surface of each of the plurality of second cyclones 60 and a bottom surface of each of the plurality of second contaminants chambers 70. Preferably, at least some part of the outside receptacle 31 is made of transparent material for users to know the amount of the contaminants collected in the first contaminants chamber 30.

The upper cover 80 closes the top end of the first contaminants chamber 30. The upper cover 80 is disposed at an upper side of the first cyclone body 20, the plurality of second contaminants chambers 70, and the outside receptacle 31 thereby forming a top surface of each of the first cyclone 10, the first contaminants chamber 30, and the plurality of second contaminants chambers 70. A gap 24 between the top end of the first cyclone body 20 and the bottom surface of the upper cover 80 forms a pathway through which contaminants separated from contaminants-laden air by centrifugal force are discharged into the first contaminants chamber 30. The upper cover 80 is detachably disposed at the outside receptacle 31 so that users open the upper cover 80 to empty contaminants collected in each of the first contaminants chamber 30 and the second contaminants chambers 70.

A sealing member 80 is disposed at the bottom surface of the upper cover 80. The sealing member 80 isolates the plurality of second contaminants chambers 70 from the first cyclone 10 and the first contaminants chamber 30. The sealing member 80 is formed in a shape corresponding to the plurality of second contaminants chambers 70. Therefore, when the upper cover 80 is mounted at the top end of the outside receptacle 31, each of the plurality of second contaminants chambers 70 forms an independent space isolated from the first cyclone 10 and the first contaminants chamber 30.

Furthermore, there is a substantially domed projecting part 83 on the center of the bottom surface of the upper cover 80. The projecting part 83 assists contaminants separated from contaminants-laden air to be discharged through the top end of the first cyclone body 20, and semi-clean air having contaminants separated to be entered the air-communicating pipe 41. Also, a grip 84 is disposed inside the projecting part 83 at the top surface of the upper cover 80 so that users can easily open and close the upper cover 80.

For an easy manufacture, the multi-cyclone contaminants collector 1 according to an embodiment of the present invention is preferably comprised of three (3) substantial parts. In other words, the multi-cyclone contaminants collector 1 according to an embodiment of the present invention includes a cyclone assembly 3, an outside receptacle 31, and an upper cover 80.

The cyclone assembly 3 includes the first cyclone 10, three (3) second contaminants chambers 70 wrapping around the first cyclone 10, and six (6) second cyclone bodies 61 formed inside the three (3) second contaminants chambers 70 are formed as one body. There are two (2) second cyclone bodies 61 per second contaminants chamber 70. The cyclone assembly 3 may be formed by an injection molding process. A plurality of fixing parts 5 is formed at a bottom end of the cyclone assembly 3.

The outside receptacle 31 is formed in a substantially cylindrical shape with a bottom surface 32, and has an opened top end. A plurality of air-discharging pipes 66 corresponding to the plurality of second cyclone bodies 61 and an air dispersing part 43 are integrally formed with the bottom surface 32 of the outside receptacle 31. An air hole 12 is formed at the bottom surface 32 of the outside receptacle 31 corresponding to the air suction pipe 11. Also, a plurality of fixing holes 33 is formed at the bottom surface 32 of the outside receptacle 31 corresponding the fixing parts 5 of the cyclone assembly 3 for fixing the cyclone assembly 3. Therefore, after inserting the cyclone assembly 3 into the outside receptacle 31, the fixing parts 5 are screwed down by joining members (not shown) such as screws through the fixing hole 33, with the result that the cyclone assembly 3 is fixed to the bottom surface 32 of the outside receptacle 31. When the cyclone assembly 3 is disposed to be mounted on or separated from the outside receptacle 31 as described above, it is very easy to separate the cyclone assembly 3 for cleaning.

The upper cover 80 is integrally formed with the projecting part 83 and the sealing member 81 by an injection molding process.

When the multi-cyclone contaminants collector 1 is formed by the three (3) injection molding parts 3, 31, and 80 as described above, the number of the parts and time for assembling are reduced. Therefore, manufacturing cost of the multi-cyclone contaminants collector 1 can be decreased.

Hereinafter, operation of the multi-cyclone contaminants collector 1 for the vacuum cleaner according to an embodiment of the present invention will be described in detail with reference to Figs. 2 and 3.

Upon turning on the vacuum cleaner, a vacuum generator 131 (see Fig. 7) operates to generate suction force. Contaminants-laden air is drawn into the suction brush 110 (see Fig. 7) from a cleaning surface by the suction force. The contaminants-laden air drawn into the suction brush 110 is moved to the multi-cyclone contaminants collector 1 in fluid communication with the suction brush 110 via an extension pipe 121 and a flexible hose 122 (see Fig. 7).

The contaminants-laden air moved to the multi-cyclone contaminants collector 1 enters into a lower portion of the first cyclone body 20 through the air suction pipe 11 (arrow A). The contaminants-laden air entered into the first cyclone body 20 forms a first upwardly whirling air current B that rises up whirling inside the first cyclone body 20. Then, contaminants are separated from the contaminants-laden air by centrifugal force operating upon the first upwardly whirling air current B. Separated contaminants are moved in a direction opposite to the gravity direction (an opposite direction of arrow K), and then, are discharged to the first contaminants chamber 30 through the top end of the first cyclone body 20. In other words, the separated contaminants are discharged between the top end of the first cyclone body 20 and the upper cover 80 as arrow E, and collected in the first contaminants chamber 30. Here, the first contaminants chamber 30 is in fluid communication with the first cyclone 10 via the plurality of spaces 25 between the plurality of second cyclones 70 so that contaminants separated in the first cyclone 10 are smoothly discharged into the first contaminants chamber 30. At this time, the first contaminants chamber 30 is isolated from the space 23 in where the upwardly whirling air current is formed by the first cyclone body 20 so that contaminants collected in the first contaminants chamber 30 are not scattered by the upwardly whirling air current B of the first cyclone body 20. Also, air forming the upwardly whirling air current B in the first cyclone body 20 is directly discharged in the gravity direction (a direction of arrow K) through the air-communicating pipe 41 so that air collision does not occur inside the first cyclone body 20.

Semi-clean air having contaminants removed in the first cyclone body 20 is discharged in the gravity direction through the air-communicating pipe (arrow C). Therefore, the semi-clean air C passing through the air-communicating pipe 41 crashes against the air dispersing part 43, and then, is dispersed into each of the plurality of air pathways 44 to wrap around the air dispersing part 43 and to be radially formed. Then, the semi-clean air C enters into the lower portion of each of the second cyclone bodies 61 through the plurality of air pathways 44 (arrow D).

The semi-clean air D entering the lower portion of the second cyclone body 61 forms an upwardly whirling air current F inside the second cyclone body 61. Then, fine contaminants are separated from the semi-clean air and discharged in a direction opposite to the gravity direction (an opposite direction of arrow K) by centrifugal force operating upon the upwardly whirling air current F. The separated fine contaminants are discharged through the gap 63 between the contaminants discharging opening 62 of the second cyclone body 61 and the dust cap 50, and then, collected in the second contaminants chamber 70 (arrow H). At this time, the second contaminants chamber 70 is partitioned into the first dust chamber 70a and the second dust chamber 70b by the partition wall 72 so that fine contaminants collected in each of the first and second dust chambers 70a and 70b are not scattered by an upwardly whirling air current formed in the second cyclone 60-2 and 60-1 disposed in each of the second and first dust chamber 70b and 70a. The dust cap 50 is disposed at the contaminants discharging opening 62 of the top end 64 of the second cyclone 60 so that fine contaminants clinging to the inner surface of the inner wall 71 are prevented from entering the second cyclone body 61 through the contaminants discharging opening 62. Also, the dust cap 50 prevents fine contaminants collected in each dust chambers 70a and 70b of the second contaminants chambers 70 from flowing back into the second cyclone body 61 when the multi-cyclone contaminants collector 1 is inclined or overturned.

Clean air having fine contaminants removed when whirling up inside the second cyclone body 61 is discharged in the gravity direction through the air-discharging pipe 66 (arrow G). In each of the plurality of second cyclones 60, fine contaminants are removed from the semi-clean air by the above-described operation, and then, clean air is discharged through each of the plurality of air-discharging pipes 66. The clean air discharged from the air-discharging pipe 66 passes through the vacuum generator 131, and then, is discharged outside the main body 130 of the vacuum cleaner.

When emptying contaminants collected in the first contaminants chamber 30 and the plurality of second contaminants chambers 70, users open the upper cover 80 covering the outside receptacle 31. At this time, the grip 84 of the upper cover 80 makes it easy to open the upper cover 80. Next, when users overturn the multi-cyclone contaminants collector 1, contaminants collected in the first contaminants chamber 30 and the plurality of second contaminants chambers 70 are discharged. The multi-cyclone contaminants collector 1 opening the upper cover 80 for emptying the contaminants collected in the first and second contaminants chambers 30 and 70 is more convenient to empty contaminants than the multi-cyclone contaminants collector that an bottom end is able to be opened for emptying contaminants because users can throw away watching contaminants.

Hereinafter, as another aspect of the present invention, an example of a vacuum cleaner 100 having a multi-cyclone contaminants collector 101 according to an embodiment of the present invention as described above will be explained.

Referring to Fig. 7, a vacuum cleaner 100 according to an embodiment of the present invention includes a suction brush 110, an extension pipe 121, a flexible hose 122, and a main body 130.

The suction brush 110 is provided with a contaminants suction port facing a cleaning surface to draw in contaminants-laden air.

The extension pipe 121 and the flexible hose 122 allow the suction brush 110 in fluid communication with the main body 130. A handle 120 is disposed on an upper portion of the extension pipe 121. The handle 120 has generally a power switch 123 turning on and off the vacuum cleaner 100.

The vacuum generator 131 and the multi-cyclone contaminants collector 101 are disposed in the main body 130. The vacuum generator 131 generates suction force to draw contaminants-laden air through the suction brush 110, and is in fluid communication with the multi-cyclone contaminants collector 101 via a piping member 132. The multi-cyclone contaminants collector 101 separates contaminants from contaminants-laden air drawn from the suction brush 110 and collects the separated contaminants therein. The multi-cyclone contaminants collector 101 includes a first cyclone forming contaminants-laden air an upwardly whirling air current to separate relatively large contaminants, a first contaminants chamber collecting contaminants separated in the first cyclone, and at least one second cyclone forming air discharged from the first cyclone into an upwardly whirling air current to separate fine contaminants, and at least one second contaminants chamber collecting fine contaminants discharged from the at least one second cyclone. The structure and operation of the multi-cyclone contaminants collector 101 is the substantially same as that of the multi-cyclone contaminants collector 1 described above, a detailed description thereof is not repeated for conciseness.

Therefore, upon turning on the power switch 123 of the vacuum cleaner 100 and then moving the suction brush 110 on a cleaning surface, contaminants on the cleaning surface are drawn into the contaminants suction port of the suction brush 110 with outside air by suction force of the vacuum generator 131. Contaminants-laden air drawn into the suction brush 110 is entered the multi-cyclone contaminants collector 101 via the extension pipe 121 and the flexible hose 122. Contaminants entering the multi-cyclone dust collector 101 are separated by the first and second cyclones 10 and 60 (see Fig. 2). Clean air having contaminants removed is discharged outside the main body 130.

In the above description, a canister type vacuum cleaner is used as an example of vacuum cleaners employing the multi-cyclone contaminants collector according to an embodiment of the present invention; however, this should not be considered as limiting. Various types of vacuum cleaners such as an upright type vacuum cleaner may employ the multi-cyclone dust collector according to an embodiment of the present invention.

With the multi-cyclone contaminants collector for the vacuum cleaner according to an embodiment of the present invention, a dust cap is disposed at the contaminants discharging opening of each of the plurality of second cyclones, thereby preventing fine contaminants collected in the second contaminants chamber from flowing back.

With the multi-cyclone contaminants collector for the vacuum cleaner according to an embodiment of the present invention, the second contaminants chamber is partitioned by the partition wall into dust chambers corresponding to the number of the second cyclones so that contaminants collected in a dust chamber are not scattered by upwardly whirling air currents of the other second cyclones around the dust room.

Furthermore, with the multi-cyclone contaminants collector for the vacuum cleaner according to an embodiment of the present invention, contaminants separated in the first cyclone are discharged through the plurality of spaces between the plurality of second contaminants chambers so that contaminants are smoothly and evenly discharged to the first contaminants chamber.

Also, with the multi-cyclone contaminants collector for the vacuum cleaner according to an embodiment of the present invention, the first cyclone, the plurality of second cyclone bodies, and the plurality of second contaminants chambers can be integrally formed in a body by the injection molding process so that the number of the parts and time for assembling can be reduced. Therefore, manufacturing cost for the multi-cyclone contaminants collector is decreased.

With the multi-cyclone contaminants collector for the vacuum cleaner according to an embodiment of the present invention, the first contaminants chamber is disposed to wrap around the plurality of second contaminants chambers so that the first contaminants chamber can have the larger volume as much as possible than the volume of the second contaminants chamber.

While the embodiments of the present invention have been described, additional variations and modifications of the embodiments may occur to those skilled in the art once they learn of the basic inventive concepts. Therefore, it is intended that the appended claims shall be construed to include both the above embodiments and all such variations and modifications that fall within the spirit and scope of the invention.

## Claims

1. A multi-cyclone contaminants collector for a vacuum cleaner comprising:
at least one first cyclone drawing outside air so as to separate contaminants;
at least one second cyclone separating fine contaminants from air discharged from the at least one first cyclone, the at least one second cyclone having a contaminants discharging opening for discharging the separated fine contaminants; and
a dust cap disposed at the contaminants discharging opening, the dust cap preventing discharged fine contaminants from re-entering the at least one second cyclone.

2. The multi-cyclone contaminants collector of claim 1, wherein the at least one second cyclone has a diameter smaller than the at least one first cyclone.

3. The multi-cyclone contaminants collector of any of claims 1 and 2, wherein the contaminants discharging opening is disposed at a top end of the at least one second cyclone.

4. The multi-cyclone contaminants collector of any of claims 1 to 3, wherein the dust cap is disposed on a level with or higher than the contaminants discharging opening.

5. The multi-cyclone contaminants collector of any of claims 1 to 4, wherein the dust cap further comprises a dust guiding part.

6. A multi-cyclone contaminants collector for a vacuum cleaner, comprising:
at least one first cyclone drawing outside air so as to separate contaminants;
a plurality of second cyclones separating fine contaminants from air discharged from the at least one first cyclone, each of the plurality of second cyclones having a contaminants discharging opening for discharging the separated fine contaminants;
a plurality of second contaminants chambers respectively wrapping around at least two second cyclones of the plurality of second cyclones, each of the plurality of second contaminants chambers collecting fine contaminants discharged from the at least two second cyclones; and
a partition wall partitioning each of the plurality of second contaminants chambers into spaces corresponding the at least two second cyclones to collect fine contaminants discharged from each of the at least two second cyclones.

7. The multi-cyclone contaminants collector of claim 6, wherein the plurality of second contaminants chambers is in contact with an outer circumferential surface of the at least one first cyclone.

8. The multi-cyclone contaminants collector of any of claims 6 and 7, wherein each of the plurality of second contaminants chambers is spaced apart from next second contaminants chamber so that contaminants separated in the at least one first cyclone are discharged through spaces between the plurality of second contaminants chambers.

9. The multi-cyclone contaminants collector of any of claims 6 to 8, wherein each of the plurality of second cyclones further comprises a dust cap disposed at the contaminants discharging opening to prevent fine contaminants collected in the second contaminants chamber from flowing back into the plurality of second cyclone.

10. The multi-cyclone contaminants collector of any of claims 6 to 9, wherein the at least two second cyclones comprise a lower portion that projects out the second contaminants chamber.

11. The multi-cyclone contaminants collector of any of claims 6 to 10, further comprising a first contaminants chamber collecting contaminants discharged from the at least one first cyclone, the first contaminants chamber wrapping around the at least one first cyclone and the plurality of second contaminants chambers.

12. A multi-cyclone contaminants collector for a vacuum cleaner, comprising:
a first cyclone separating contaminants from outside air and discharging separated contaminants in a direction opposite to the gravity direction;
a plurality of second cyclones separating fine contaminants from air discharged from the first cyclone, each of the plurality of second cyclones having a contaminants discharging opening for discharging separated fine contaminants in a direction opposite to the gravity direction;
a plurality of second contaminants chambers respectively wrapping around at least two second cyclones of the plurality of second cyclones, each of the second contaminants chambers collecting fine contaminants discharged from the at least two second cyclones; and
a partition wall partitioning each of the plurality of second contaminants chambers into spaces corresponding to the at least two second cyclones to collect fine contaminants discharged from each of the at least two second cyclones;
wherein each of the plurality of second contaminants chambers is spaced apart from next second contaminants chamber so that contaminants separated in the first cyclone are discharged through spaces between the plurality of second contaminants chambers.

13. The multi-cyclone contaminants collector of claim 12, wherein the plurality of second contaminants chambers is in contact with an outer circumferential surface of the first cyclone.

14. The multi-cyclone contaminants collector of any of claims 12 and 13, wherein each of the plurality of second cyclones further comprises a dust cap disposed at the contaminants discharging opening to prevent fine contaminants collected in the second contaminants chamber from flowing back into the plurality of second cyclones.

15. The multi-cyclone contaminants collector of claim 14, wherein the dust cap further comprises a dust guiding part.
